# EUROPEAN PATENT APPLICATION

(11) **EP 4 773 163 A1**
(43) Date of publication of application: **08.07.2026**
(21) Application number: 24860026.4
(22) Date of filing: 20.03.2024
(51) Int. Cl.: H01F 41/02, H02K 15/02, B21D 43/22, B21D 28/02, H02K 41/02

(54) **APPARATUS FOR MANUFACTURING LAMINATED CORE**

(30) Priority: 29.08.2023 KR 20230113759
(71) Applicant: Posco Mobility Solution Corporation, Cheonan-si, Chungcheongnam-do 31032 (KR)
(72) Inventor: KANG, Sukjo, Asan-si, Chungcheongnam-do 31417 (KR); WOO, Dukkyoun, Cheonan-si, Chungcheongnam-do 31166 (KR); CHI, Junggyu, Cheonan-si, Chungcheongnam-do 31050 (KR); PARK, Changdon, Cheonan-si Chungcheongnam-do 31158 (KR); HONG, Igyeong, Pyeongtaek-si Gyeonggi-do 17845 (KR); CHAE, Subeom, Cheonan-si Chungcheongnam-do 31032 (KR); LEE, Jeongil, Asan-si, Chungcheongnam-do 31467 (KR); KIM, Yeeun, Cheonan-si, Chungcheongnam-do 31031 (KR); LEE, Yagob, Cheonan-si, Chungcheongnam-do 31185 (KR); SEO, Seongmin, Seoul 02176 (KR); KANG, Taeho, Cheonan-si Chungcheongnam-do 31156 (KR); NAM, Kitaek, Pyeongtaek-si, Gyeonggi-do 18014 (KR); KIM, Chanjung, Cheonan-si, Chungcheongnam-do 31085 (KR); YOU, Jaechun, Cheonan-si, Chungcheongnam-do 31037 (KR)
(74) Representative: IPAZ
(86) International application number: PCT/KR2024/003494
(87) International publication number: WO 2025/048094

(57) **Abstract**

Disclosed are a laminated core manufacturing apparatus processing a core material to form laminas of different sizes. The laminated core manufacturing apparatus comprises a ball screw and a moving die for processing a material intermittently transferred. The moving die may be connected to the ball screw and move along a linear path formed by the ball screw.

According to the present invention, the size of the lamina, for example, the width of the lamina, can be set within various ranges without change of the ball screw used for movement of the moving die. Also, the number of stacked laminas or the thickness of the laminated core can be variably set. The width of the laminas can be easily adjusted, and the size, i.e., the width of the laminas can be precisely controlled.

## Description

### [Technical Field]

The present invention relates to a core manufacturing apparatus, and more particularly, to a laminated core manufacturing apparatus including a moving die for forming laminas with different sizes, for example, different widths, by processing a material intermittently transferred.

### [Background Art]

Generally, a laminated core is a core made by stacking thin plates, i.e., laminas, and is used as a core for a rotor or a stator of generators or motors, as well as a core for ignition systems of automobiles.

Recently, progressive dies are used for manufacturing the laminated cores. More particularly, the laminas can be sequentially formed by blanking process in the progressive die. Depending on the structure of the laminated core, laminas with the same shape and size may be stacked, or laminas with different sizes, for example, widths, may be stacked.

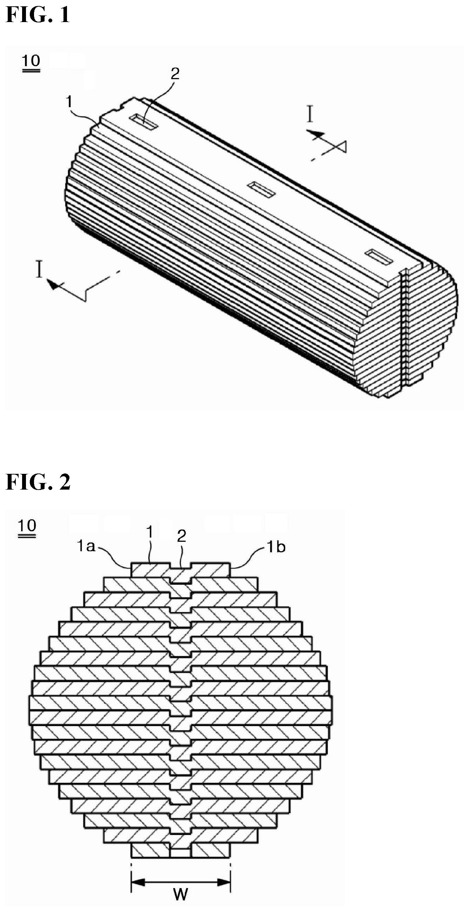

As a specific example of a laminated core having the laminas with different widths, there is a laminated core for ignition systems, which is also referred to as a pencil core. FIGS. 1 and 2 show an example of a laminated core for an ignition system.

Referring to FIGS. 1 and 2, the pencil core 10 may have laminas 1 with different widths, and the laminas are stacked in the vertical direction and integrated. The laminas 1 may be integrated by interlock tabs 2, i.e., embossed projections. The interlock tab 2 formed on the upper lamina of adjacent laminas may be press-fitted into the interlock tab of the lower lamina, thus allowing the adjacent laminas to be coupled.

To manufacture the laminas 1, the material for manufacturing the core goes through a plurality of processes including a notching process for changing the width of the laminas and a blanking process for sequentially forming the laminas.

Korean Patent No. 10-0510059 discloses an example of an apparatus for manufacturing a laminated core by stacking laminas of different widths, more specifically, an apparatus for manufacturing the pencil core.

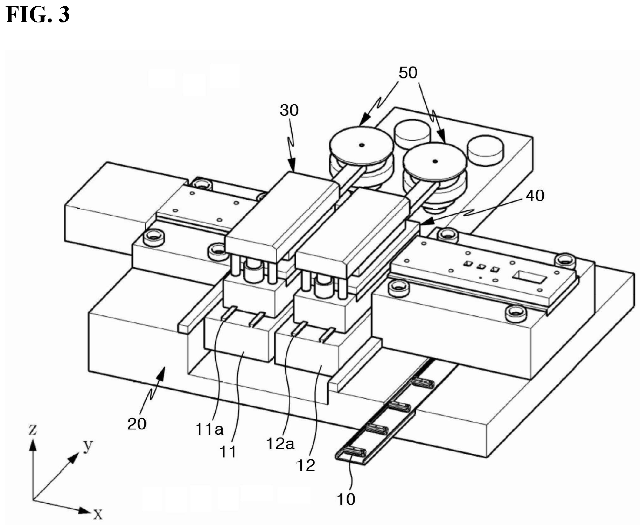

Referring to FIG. 3, the apparatus includes first and second dies 30, 40 that move in a direction intersecting with the transfer direction (x-axis direction) of the metal strip, i.e., in the width direction (y-axis direction) of the metal strip, and a cam 50 driven by a motor for reciprocating action of the first and second dies 30, 40 in the y-axis direction.

A first notching punch that moves in the z-axis direction to punch the metal strip and forms a first edge 1a of the lamina 1 is provided at the first die 30, and a second notching punch for forming a second edge 1b of the lamina 1 is provided at the second die 40.

The first and second dies 30, 40 move a distance corresponding to the width difference of the laminas, and the notching punches are pressed by an upper die (not shown) that ascends and descends in the z-axis direction and punch the metal strip. The width W of the lamina is adjusted by the position of the first and second dies 30, 40.

The first and second dies 30, 40 are connected to the cam 50 via cam connectors 31, 41. The cam connectors 31, 41 are connected to a cam groove 51 formed in the cam 50, and the positions of the first and second dies 30, 40 are adjusted according to the profile of the cam groove 51. When the positions of the first and second dies 30, 40 are changed, changes of the y coordinates of punches allow the width W of the lamina to vary.

The first and second dies 30, 40 linearly reciprocate on die supports 11, 12. Downstream of the first and second dies 30, 40, a blanking die for blanking the metal strip is provided, and a core discharge path 10 for ejecting the laminated core, i.e., pencil core 10, is provided below the blanking die.

Korean Patent No. 10-1191430, etc., also disclose inventions for manufacturing the laminated cores (the pencil cores) by stacking laminas of different widths. The technology of manufacturing laminated cores by sequentially forming laminas of different widths using a progressive die is known in the art of laminated core technology.

### [Disclosure]

### [Technical Problem]

It is an object of the present invention to provide a laminated core manufacturing apparatus including a moving die driven by a ball screw, in order to sequentially form laminas of different sizes and manufacture a laminated core.

### [Technical Solution]

An aspect of the present invention provides a laminated core manufacturing apparatus comprising a ball screw and a moving die for processing a material intermittently transferred. The moving die may be connected to the ball screw and move along a linear path formed by the ball screw.

The moving die may be connected to a screw block of the ball screw, i.e., a block in which a female thread is formed, and reciprocate along the linear path. The moving die may include a notching punch for punching the material and a notching die having a notching hole facing the notching punch. The notching die may be displaced by the ball screw and moves together with the notching punch.

The laminated core manufacturing apparatus may further comprise a linear motion (LM) guide for guiding the linear motion of the moving die.

### [Advantageous Effects]

According to the present invention, the size of the lamina, for example, the width of the lamina, can be set within various ranges without change of the ball screw used for movement of the moving die. Also, the number of stacked laminas or the thickness of the laminated core can be variably set. The width of the laminas can be easily adjusted, and the size, i.e., the width of the laminas can be precisely controlled. Furthermore, according to the present invention, a mechanism for the linear motion of the moving die can be simplified. Thus, the inconvenience of preparing a separate laminated core manufacturing apparatus for each size of laminated core, or entirely replacing a cam as in the prior art, can be alleviated or resolved.

### [Description of Drawings]

The present invention can be well appreciated with reference to drawings described below jointly with a detailed description for exemplary embodiments of the present invention to be described below, in which:
FIG. 1 is a perspective view showing an example of a pencil core;
FIG. 2 shows a cross-sectional view taken along line I-I of FIG. 1;
FIG. 3 is a perspective view showing an example of a pencil core manufacturing apparatus according to the prior art;

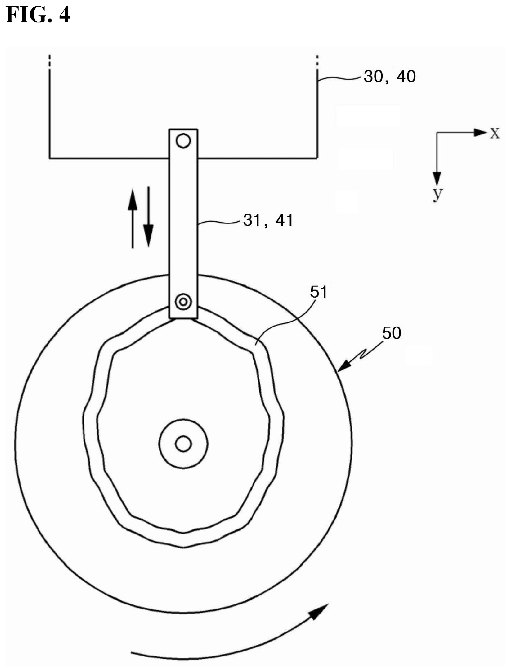

FIG. 4 is a plan view showing a cam mechanism of the apparatus of FIG. 3;
FIG. 5 shows a moving die and a ball screw of a laminated core manufacturing apparatus according to an embodiment of the present invention;
FIG. 6 is a plan view of the moving die of the apparatus shown in FIG. 5; and
FIG. 7 is a longitudinal sectional view of the apparatus shown in FIG. 6.

### [Best Mode]

Hereinafter, preferred embodiments of the present invention are described with reference to the accompanying drawings. In describing the embodiments, the same name and the same reference numeral are used with respect to the same element and repetitive description thereto will be omitted. And the descriptions of technologies well known in the art are omitted. Moreover, description of technologies well known in the art are omitted or minimized.

The terms included herein are used to explain embodiments of the present invention, and do not limit the scope of the present invention. For example, numerical terms such as "first," "second," and the like are used for convenience of description and do not define or limit the number of elements for the present invention.

And, when an element is described as being "connected" to other element, it should be understood to include not only direct connections of the elements, but also indirect connections of the elements through one or more intermediate elements.

It should be understood that term "include" or "have" described in this specification not exclude a possibility of presence or addition of one or more other features or elements which is not mentioned in this specification.

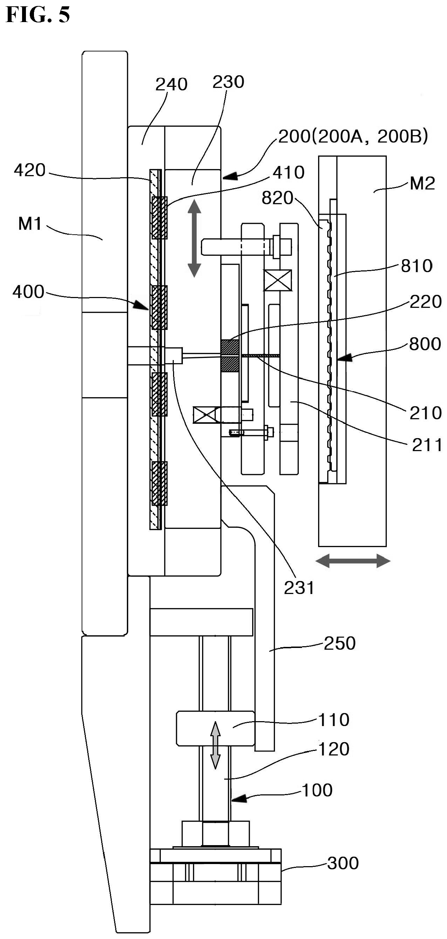

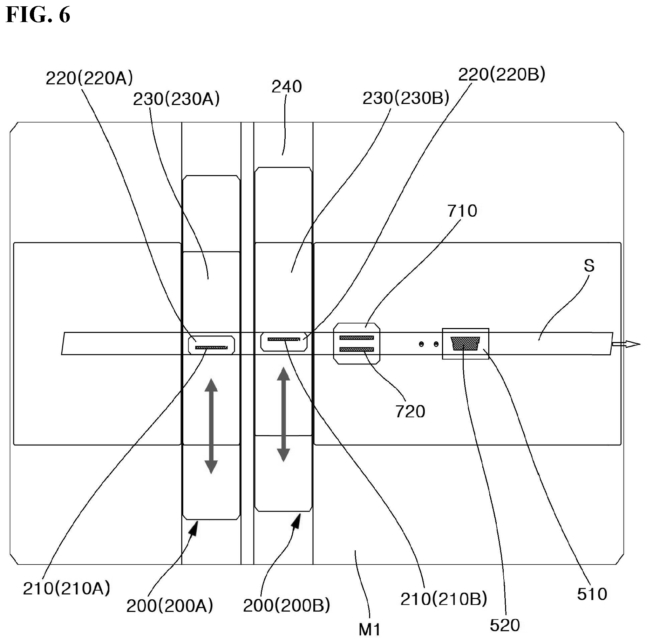

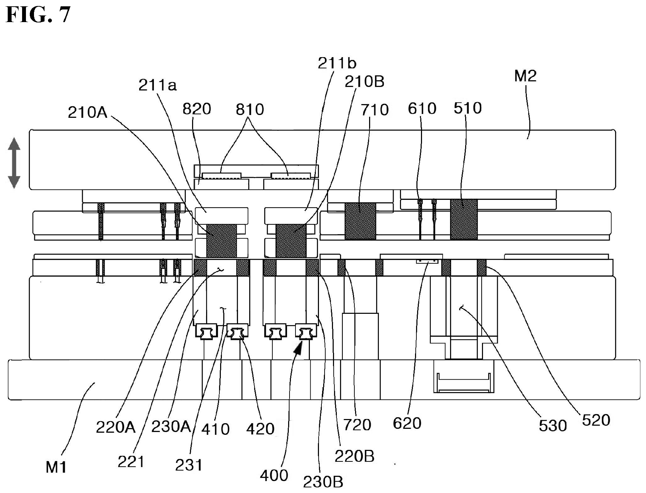

Referring to FIGS. 5 to 7, an embodiment of a laminated core manufacturing apparatus according to the present invention forms and stacks laminas of different sizes to manufacture a laminated core. For example, the apparatus may sequentially form laminas of different widths and manufacture a laminated core for an ignition system, i.e., a pencil core.

The apparatus according to the present embodiment includes a ball screw 100 and a moving die 200. The moving die 200 is connected to the ball screw 100 and processes a material S, for example, a metal strip intermittently transferred. The position of the moving die can be varied along a linear path by the ball screw 100.

In this embodiment, the moving die (200 is connected to a screw block 110 of the ball screw 100 and may reciprocate along the linear path when the ball screw operates. The screw block 110 of the ball screw 100 is a nut block with a female thread, and a screw shaft 120 having a male thread on its surface is inserted into the screw block 110.

When the screw shaft 120 is rotated by a motor 300, for example, a servo motor, the screw block 110 linearly moves along the screw shaft 120. The moving die 200, which is connected to the screw block 110 linearly moves together with the screw block 110, and accordingly, the processing position of the moving die 200 can be changed.

The moving die 200 includes a notching punch 210 and a notching die 220 for punching the material S. The notching die 220 has a notching hole 221 facing the notching punch 210, and the notching punch 210 and the notching die 220 move together by means of the ball screw 100.

And, a Linear Motion Guide (LM Guide) 400 is provided at the moving die 200 and guides linear motion of the moving die. More particularly, the notching die 220 is provided on a die block 230, and the die block 230 is movably provided on a die support 240. In this embodiment, the die block 230 is connected to the screw block 110 via a block connector 250.

The die block 230 has a scrap discharge hole 231 that communicates with the notching hole 221, and the LM guide 400 is provided at the die block 230 to guide linear motion of the die block. For example, a slide block 410 of the LM guide 400 is fixed to the die block 230, and a rail 420 of the LM guide 400 is fixed to the die support 240.

This embodiment further includes a blanking punch 510 and a blanking die 520, for punching the core material S and sequentially forming the laminas. In addition, this embodiment may further include an embossing punch 610 and an embossing die 620 for forming interlock tabs, i.e., embossing projections on the material to integrate the laminas. Of course, the interfaces of the laminas may be bonded by adhesive. Since the techniques of manufacturing laminated cores using the interlock tab or the adhesive are known in this art, further explanation thereof is omitted.

The laminated core manufacturing apparatus may further include at least one additional punch 710 and die 720 for processing the material.

In this embodiment, the moving die 200 punches the material S, i.e., a metal strip, to determine the width of the laminae. More particularly, the moving die 200 is a device punching the metal strip S to adjust the width of each lamina, and forms both edges of each lamina by punching the metal strip S, that is, a first edge 1a and a second edge (1b) of each lamina shown in FIG. 2.

The blanking punch 510 and the blanking die 520 are devices for punching the metal strip S and sequentially forming the laminas by blanking process, and are provided downstream of the moving die 200 with respect to the transfer direction of the metal strip S.

In this embodiment, the moving die 200 includes a first moving die 200A for forming the first edge of the lamina, and a second moving die 200B for forming the second edge of the lamina.

The first and second moving dies 200A, 200B punch the metal strip S while changing their positions in a direction intersecting with the transfer direction of the metal strip S, for example, in the y-axis direction perpendicular to the transfer direction (x-axis direction). However, the moving direction is not limited thereto and may be changed depending on the shape of the lamina.

In this embodiment, the first moving die 200A and the second moving die 200B move in opposite directions, and each is connected to the ball screw 100. For convenience of the description, one ball screw connected to the first moving die 200A is referred to as the first ball screw, and another ball screw connected to the second moving die 200B is referred to as the second ball screw.

Accordingly, the screw block of the first ball screw is connected to the die block of the first moving die, and the screw block of the second ball screw is connected to the die block of the second moving die.

The laminated core manufacturing apparatus is a press machine, the first and second moving dies 200A, 200B is movably provided on a lower die M1 of the press machine, and an upper die M2 is provided above the lower die M1 so as to be vertically movable. The upper die M2 presses the first and second moving dies 200A, 200B, thereby stamping the metal strip S.

In this embodiment, the first and second moving dies 200A, 200B respectively include notching punches 210A, 210B and notching dies 220A, 220B. For the convenience of explanation, the notching punch 210A and the notching die 220A of the first moving die 200A are referred to as a first notching punch and a first notching die, and the notching punch 210B and the notching die 220B of the second moving die 200B are referred to as a second notching punch and a second notching die.

The metal strip S is intermittently transfer by one pitch at a time at the upper side of the lower die M1, and the lower die M1 is provided with the moving die 200 and the blanking die 520. a lamination hole 530 is provided below the blanking die 520, for stacking the laminas.

The upper die M2 is provided above the lower die M1. In this embodiment, notching, blanking, and embossing process are performed by means of the vertical movement of the upper die M2. That is, this embodiment is a press-based apparatus, and more specifically, a progressive die type laminated core manufacturing apparatus as described above.

More particularly, the upper die M2 is provided with the blanking punch 510 and the embossing punch 610. The metal strip S is transferred between the lower die M1 and the upper die M2, and passes between the notching punch 210 and the notching die 220 of the moving die.

The position of the first moving die 200A is changed by the first ball screw, and forms the first edge 1a of the lamina. The position of the second moving die 200B is changed by the second ball screw, and forms the second edge 1b of the lamina.

The notching punch 210 is provided above the notching die 220, and the notching punch 210 is provided at a punch block 211. More particularly, the first notching punch 210A is provided at a first punch block 211a, and the second notching punch 210B is provided at a second punch block 211b.

The first punch block 211a and the first die block 230A move together in the same direction, by means of the first ball screw, and the second punch block 211b and the second die block 230B move together in the same direction, by means of the second ball screw.

Each of the first and second die blocks 230A, 230B is mounted to be slidable on the die support 240 of the lower die M1 via the LM guide 400.

In this embodiment, the first punch block 211a is provided above the first die block 230A, and the second punch block 211b is provided above the second die block 230B. The first and second punch blocks 211a, 211b are pressed by the upper die M2 so as to descend, and are elastically supported upward by resilient members such as springs so that they return to their original positions when the upper die M2 ascends.

When the first and second punch blocks 211a, 211b are pressed downward by the upper die M2, the notching punches 210 descend and punch the metal strip, thereby performing the notching process to form both edges of the lamina.

As described above, the descent of the punch blocks 211 is caused by the pressing of the upper die M2, and the ascent of the punch blocks 211 can be caused by the elastic restoring force of the springs.

To sequentially form the laminas having different widths, the notching punches 210 may selectively skip punching of the metal strip S at predetermined times. More particularly, in the case of forming a lamina with the maximum width among the laminas constituting the pencil core, the notching process by the moving die 200 is omitted. To skip the notching process, this embodiment may include a notching adjuster 800 is provided in the upper die M2.

In this embodiment, the notching adjuster 800 includes a lever 810 movably mounted on the upper die M2, a counter member 820 that selectively engages with the lever 810, and an actuator (not shown) that selectively displaces the lever 810.

Examples of the actuator include hydraulic or pneumatic cylinders, or solenoids, etc. When the actuator pulls or pushes the lever 810 in the horizontal direction, the teeth of the lever 810 engage with the teeth of the counter member 820, thereby preventing the counter member from pressing the punch block 211 even if the upper die descends, and skipping the notching process.

Conversely, when the teeth of the lever 810 and the teeth of the counter member 820 are misaligned due to the movement of the lever 810, the punch block 211 is pressed downward by the counter member when the upper die M2 descends, thereby allowing the notching process.

The notching adjuster 800 functions as a slide cam that changes the direction of motion, and since the cam mechanism is well known in the art, further explanation thereof will be omitted.

The scrap separated from the metal strip by the first and second moving dies 200A, 200B is discharged through the scrap discharge holes 231 formed in the die blocks.

The mechanism for processing the metal strip using the notching punches 210 is disclosed in Korean Patent Nos. 10-0510059, 10-1191430, and 10-1236927. As the blanking punch and the blanking die of the laminated core manufacturing apparatus are known in this art, additional explanations regarding the moving die, the blanking punch, and the blanking die will be omitted.

According to the present embodiment, the position of the first notching punch 210A can be adjusted by the first ball screw in the widthwise direction of the metal strip, and the position of the second notching punch 210B can be is adjusted by the second ball screw in the widthwise direction of the metal strip. The first and second notching punches 210A, 210B move in opposite directions and alter the notching positions.

Although the above-described embodiment exemplifies the manufacture of a pencil core, the laminated core manufacturing apparatus according to the present invention is not limited thereto. The apparatus having the moving die may also be applied to the production of other cores having change of shape, such as axial flux motor cores, for example, the stator core of an axial flux motor where the width or thickness varies.

Although the preferred embodiments of the present invention have been disclosed for illustrative purposes, it should be understood by those skilled in the art that these embodiments are given by way of illustration only and the present invention is not limited thereto.

Therefore, various modifications, variations, and alterations can be made by those skilled in the art without departing from the spirit and scope of the present invention. And the scope of the invention should be limited only by the accompanying claims and equivalents thereof.

### [Industrial Applicability]

The present invention can be applicable to the manufacture of the 0laminated cores, and according to the present invention, a laminated core can be manufactured by stacking laminas of different widths.

## Claims

1. A laminated core manufacturing apparatus comprising:
a ball screw; and
a moving die connected to the ball screw, for processing a material intermittently transferred;
wherein the moving die moves along a linear path formed by the ball screw.

2. The laminated core manufacturing apparatus of claim 1, wherein the moving die is connected to a screw block of the ball screw.

3. The laminated core manufacturing apparatus of claim 2,
wherein the moving die includes:
a notching punch configurated to punch the material, and
a notching die having a notching hole facing the notching punch, displaced by the ball screw and moving together with the notching punch.

4. The laminated core manufacturing apparatus of any one of claims 1 to 3, further comprising an LM guide that guides the linear motion of the moving die.
